# EUROPEAN PATENT SPECIFICATION

(11) **EP 0 641 293 B1**
(45) Date of publication and mention of the grant of the patent: **28.10.1998**
(21) Application number: 92916660.1
(22) Date of filing: 03.08.1992
(51) Int. Cl.: C02F 1/52, C02F 9/00, D21C 5/02

(54) **DEWATERING OF AQUEOUS SUSPENSIONS**
ENTWÄSSERUNG VON WÄSSRIGEN SUSPENSIONEN
DESHYDRATATION DE SUSPENSIONS AQUEUSES

(30) Priority: 02.08.1991 GB 91167015
(43) Date of publication of application: 08.03.1995
(73) Proprietor: ALLIED COLLOIDS LIMITED, Bradford, West Yorkshire BD12 0JZ (GB)
(72) Inventor: LANGLEY, John, Graham Thorpe Lane Guiseley, West Yorkshire LS20 8NS (GB); FORD, Philip, Anson, Suffolk, VA 23433 (US); TREMONT, Stephen, Robert, Portage, MI 49002 (US); SATTERFIELD, Brian, Frederic, Columbia, SC 29212 (US)
(74) Representative: Lawrence, Peter Robin Broughton
(86) International application number: GB9201430
(87) International publication number: WO9302967

(56) References cited:
- EP-A- 0 406 105
- FR-A- 1 472 923
- GB-A- 867 450
- US-A- 3 617 568
- US-A- 5 071 587

## Description

This invention relates to a process for separating suspended solids from an aqueous suspension and which includes a dewatering stage that is conducted by pressure filtration.

The invention is of particular applicability to processes in which the suspension contains hydrophobic material such as ink particles, and especially when the suspension is a suspension of waste material in a paper deinking process.

It is well known to add a flocculant material to a suspension so as to cause the suspended material to flocculate before dewatering. Suitable flocculants for this purpose include alum and other polyvalent metal salts, bentonite, and various natural or synthetic polymers that can be non-ionic, anionic or cationic. In some instances combinations are known, for instance bentonite followed by a polymer. Some of the flocculant materials might be considered, more accurately, to be coagulants rather than flocculants.

The choice of flocculant is dictated by the particular process steps that are involved, the materials that are being flocculated, and the ecoomics of the process. For instance a process that is designed to make a product that can be sold may justify a more expensive flocculant than a process designed to make a waste product. Similarly, a process designed to flocculate essentially hydrophilic materials will generally require different flocculants from a process designed to flocculate essentially hydrophobic materials.

A flocculation process useful in the production of paper is commercialised under the trade name "Hydrocol" and is described in EP-A-235893. In this a substantially linear synthetic cationic polymer having molecular weight above 500,000 is added to a cellulosic suspension to form flocs which are then broken down by shearing to form microflocs, and bentonite is then added to the sheared suspension, which is then drained through a screen to form a paper sheet. This sheet can then be dried over hot rolls or in an oven. It is essential in this process to apply sufficient shear to break the initial flocs down to microflocs as otherwise the paper that is formed by drainage through the screen will have bad formation and there will be inefficient drying of the paper in the oven or over the hot rolls because moisture will be trapped in the flocs.

The process is clearly of no relevance to a process where the dewatering is by a different technique (pressure filtration) the suspended solids are entirely different (generally containing hydrophobic ink) and the intended product is a cake that will frequently be dumped, instead of being a sheet of paper that can be sold.

In order to dewater by pressure filtration a suspension containing hydrophobic particles such as the insoluble ink particles obtained in a paper deinking process it is common to add a flocculant before the pressure filtration, and the flocculant is normally a high molecular weight (for instance intrinsic viscosity above 4dl/g) cationic polymer.

The use of flocculation in the treatment of deinking effluent is described in EP-A-0406105. Flocculation of a colloidal system using a cationic flocculant followed by an anionic polymeric flocculant is described in US-A-3617568.

It would be desirable to be able to improve the process, by using a more effective flocculation system, in order that the cake obtained by pressure filtration could be obtained more easily and, in particular, to a higher dry matter content.

A process according to the invention for separating suspended solids from an aqueous suspension of suspended solids comprising cellulosic fibre and hydrophobic material comprises flocculating the suspended material by mixing a cationic polymeric flocculant into the suspension, aggregating the flocculated material by mixing an anionic colloidal material selected from inorganic polymers and swelling clays into the flocculated suspension, and separating the aggregated material from the suspension by pressure filtration.

The pressure filtration can be effected by centrifugal dewatering (since the centrifugal force will have the effect of applying pressure) or by any other conventional pressure filtration system such as a filter press, screw press, belt press or tube press.

The process can be used to collect a cake that is industrially useful (for instance a pigment cake) that can then be broken and used in a desired manner, but it is often preferred to apply the invention to the separation of waste solids from a liquor, in which event the cake obtained by pressure filtration may be dumped.

The invention has the advantage that it permits the dewatering stage to be conducted very rapidly and very efficiently and it can be performed to give a cake having a higher solids content than is often obtained by conventional processes.

The suspension that is to be dewatered contains cellulosic fibres and hydrophobic material as suspended solids. As mentioned below it may comprise mill effluent solids. The suspension may comprise a reject fraction from a deinking process.

The invention is of particular value when the suspension is a suspension containing at least 5% by weight (based on total solids) insoluble ink particles. Such a suspension is obtained in a paper deinking process and thus the process of the invention is preferably incorporated as part of a paper deinking process and results in the production of a cake of waste material that may then be dumped. In particular, the suspension is preferably the hydrophobic reject suspension obtained in a paper deinking process by subjecting a suspension of paper fibres, filler and ink to flotation and thereby separating a hydrophobic reject suspension from a hydrophilic accept fraction. Frequently the hydrophobic reject suspension is a blend of suspensions collected from two or more flotation stages in the overall deinking process. Such a process is illustrated diagrammatically in the accompanying flow diagram.

Cellulosic material that is contaminated with ink (e.g., printed newsprint or printed cardboard) is subjected to a pulping and deinking process that generally involves a series of steps including various bleaching and screening steps (that are not shown) to form an aqueous pulp that is passed along line 1 to a dewatering stage 2. This dewatering stage is generally an air flotation stage in which the ink-containing solids are floated off as a Reject slurry, that is removed along line 3 to a collection vessel 4, while the hydrophilic Accept liquor is passed through line 5 to one or more stages 6 in which the liquor is concentrated (e.g., by drum or other filtration) and the solids in it are washed and filtered. The useful solids from these stages are taken through line 7 to a stock tower for recycling while ink-contaminated wash water is taken by line 8 towards a Krofta clarifier or other flotation cell 9. The hydrophobic Reject slurry that is floated in this cell is taken by line 10 to the vessel 4, while water can be removed by line 11 and recycled.

Chemicals to promote the flotation can be added at the dosing system 12.

In addition to feeding the reject slurries from flotation cells 2 and 9 to the vessel 4, frequently other reject solids, for instance general mill effluent solids, may be fed to it through line 13.

The slurry accumulated in vessel 4 is passed through line 14 and dosing system 15 to an Adritz or other belt press 16 where it is subjected to pressure filtration to produce a water effluent removed through pipe 17 and a cake that can be removed, for instance as shown at 18, and can then be dumped, for instance as landfill.

The slurry that is to be filtered typically has a solids content of below 5%, usually below 3% and often below 1%, for instance below 0.5%. The solids content is usually at least 0.05%, and is often at least 0.1%. The solids content of this slurry typically contains 10 to 70% (often 20 to 40%) by weight cellulosic fibres and/or fines, 0 to 80% (often 30 to 70%) pigment and other filler, and 5 to 50% (often 10 to 30%) insoluble ink. The ink may have initially been water insoluble or may have been insolubilised during the process.

The flotation stage or stages may be conducted as dispersed air flotation processes in which air at atmospheric pressure is forced into the liquor, or they may be conducted as dissolved air flotation processes in which the in-flowing liquor is pressurised in the presence of air so as to dissolve air in the liquor, and the pressure is released in the flotation cell (or alternatively the inflowing liquor may be under atmospheric pressure and the flotation cell may be under reduced pressure). Irrespective of the precise manner of effective air flotation, the central feature is that solids are floated to form a Reject fraction, and the clarified liquor remains as the Accept fraction.

The use of a belt press is particularly preferred.

The cationic polymer that is used in the invention can be a natural cationic polymer such as chitosan or a modified natural cationic polymer such as cationic starch. Preferably however the polymer is an organic synthetic polymer that is substantially water soluble and that is formed by polymerising one or more ethylenically unsaturated monomers, in generally acrylic monomers, that consist of or include cationic monomer. Suitable cationic monomers are dialkylaminoalkyl (meth) acrylates and dialkylaminoalkyl (meth) acrylamides, either as acid salts or preferably as quaternary ammonium salts. The alkyl groups may each contain 1 to 4 carbon atoms and the aminoalkyl group may contain 1 to 8 carbon atoms. Particularly preferred are dialkylaminoethyl (meth) acrylates, dialkylaminoethyl (meth) acrylamides and dialkylaminopropyl (meth) acrylamides. These cationic monomers are preferably copolymerised with a non-ionic monomer, preferably acrylamide. Cationic amphoteric polymers (including a minor amount of anionic groups) can also be used. Preferred polymers are particulate as in EP 202780.

Various other cationic polymers that may be used include polyethylene imines, dicyandiamide polymers, polyamine epichlorhydrin polymers and polymers of diallyl monomers such as diallyl methyl ammonium chloride, either as homopolymer or copolymer with acrylamide or other comonomer.

The polymer can have sufficiently high molecular weight (e.g., intrinsic viscosity above 4dl/g) that it is a bridging flocculant. However the cationic polymer that is added to the suspension may have a sufficiently low molecular weight that the flocculation process can more properly be described as coagulation. The molecular weight of the polymer is such that IV is not above 3dl/g, e.g., 0.2 to 3dl/g or molecular weight 50,000 to 2 million. Suitable low molecular weight polymers of this type are low molecular weight versions of polymers of one or more ethylenically unsaturated monomers including cationic monomer, as discussed above, and the polyethyleneimine dicyandiamide, polyamine epichlorhydrin polymers, and polymers of diallyl monomers, as discussed above.

The cationic polymer generally has a relatively high charge density, for instance above 0.2 and preferably 0.4 to 2.5 equivalents of catonic nitrogen per kilogram of polymer. When the cationic polymer has IV below about 3dl/g the cationic content is preferably relatively high. For instance the polymer may be a substantial homopolymer or formed from a monomer blend at least 50% and generally at least 80%, by weight cationic monomer, any remaining monomer generally being acrylamide or other non-ionic monomer. At higher molecular weight it can be satisfactory for the amount of cationic monomer to be, for instance, 8 to 40, often around 10 to 20, mole percent.

In some instances it is desirable to include a relatively low molecular weight cationic polymer (for instance a relatively highly charged cationic polymer having molecular weight 50,000 to 2 million) as a coagulant followed by a higher molecular weight cationic polymer, for instance to act as a bridging flocculant, followed by the anionic colloidal material. For instance the coagulant can remain from an earlier stage in the process and the flocculant can be added to the slurry prior to pressure filtration.

Although the process can be conducted with relatively low degrees of mixing, with the result that there is little or no degradation of the initial flocs before the anionic colloidal material is added, it is often preferred to break the flocs down into smaller flocs before adding the anionic colloidal material. This reduction in floc size can be achieved by applying stirring or other agitation to the flocculated suspension. Naturally the extent of agitation must not be so great that the initial solids are resuspended in the aqueous suspension but it is possible, particularly if relatively large amounts of the cationic polymer flocculant are used, to choose a degree of agitation that breaks the initial flocs down to microflocs that are stable in the system against further reduction in size, and which are then aggregated by the anionic colloidal material. An advantage of reducing the floc size in this manner is that it can facilitate dewatering to a higher solids content compared to the solids content than is conveniently available if the flocs do not undergo size reduction before adding the anionic colloidal material. Size reduction of the flocs by agitation is particularly desirable when the polymer has IV above 4dl/g.

The addition of cationic polymer is made at some position ahead of the belt press or other pressure filtration apparatus and anionic colloidal material is added after the polymer addition but before the pressure filtration stage. There must be sufficient interval between the two points of addition to allow floculation to occur and, as indicated above, it can be desirable to apply sufficient mixing or other shear between the two points of addition so as to break down the initial flocs that are formed into microflocs.

The anionic colloidal material can be a inorganic polymer such as colloidal silicic acid, but preferably it is an anionic swelling clay. Such clays are known to swell to a very large extent when the dry clay is contacted with water. They are generally smectites and are frequently montmorillonites. Suitable materials are referred to as bentonites such as Wyoming bentonite, or Fullers Earth. The bentonite or other clay may have been chemically modified, e.g., by alkali treatment to convert calcium bentonite to alkali metal bentonite. The bentonite or other clay preferably swells by at least 10 or 20 times its own volume and the dry clay is contacted with water and the surface area of the anionic colloid before swelling is preferably at least 30m²/g and the surface after swelling is preferably at least 400, e.g, up to 800m²/g.

The bentonite or other clay may be provided as a powder that is mixed with water to form a slurry for convenient addition to the aqueous suspension, or may initially be provided as a slurry, and this in turn may be provided as a concentrated slurry that contains low molecular weight sodium polyacrylate or other dispersing agent or other material that will render the concentrate sufficiently fluid for ease of handling.

The amounts of cationic polymeric flocculant and anionic colloidal material used in the invention will depend upon the suspension that is being treated and the degree of agitation that is applied and the nature of the pressure dewatering process. The optimum can be determined by routine screening. If the flocculated suspension is to be agitated significantly prior to adding the anionic colloidal material, it is desirable to include sufficient cationic polymer to ensure that the microflocs that are present after the agitation all carry a relatively heavy cationic charge due to the flocculant polymer. The amount of polymer that is included in the suspension is generally at least 2ppm (based on the weight of suspension) and is generally at least 5 or 10ppm. It can be up to, for instance, 500ppm but the amount is generally below 100ppm and is frequently below 50ppm. Values of 5 to 50, often around 20 to 30, ppm are often preferred. These are all based on the total weight of suspension. Based on the solids content of the suspension, the amounts typically are at least 0.1% and often at least 0.5%, but generally below 5% and often below 2%, by weight of the solids content of the dispersion.

The amount needed for optimum results may be reduced if the suspension already contains cationic polymer from a previous stage, for instance from a previous flotation stage.

The amount of anionic colloidal material is generally at least 10ppm and usually at least 50ppm and preferably at least 100ppm, based on the weight of the dispersion. The amount is generally below 500ppm and frequently it is below 250ppm. Amounts around 50 to 150ppm are often preferred. These amounts are based on the weight of the aqueous suspension that is to be subjected to the pressure filtration. Based on the solids content of the suspension, the amounts typically are above 0.1% and generally above 0.3% and often above 1%, but the amount is generally below 5%, and preferably below 3% by weight.

In addition to providing the cationic polymeric flocculant in the suspension and then aggregating it by adding anionic colloidal material prior to pressure filtration, it can be desirable to add further cationic polymeric flocculant to the suspension after adding the anionic colloidal material and before the pressure filtration. This added cationic material is generally of high molecular weight (for instance intrinsic viscosity above 4dl/g at 25°C in 1N sodium chloride solution) and can have relatively low charge density, for instance being formed from 3 to 25 mole percent, often 8 to 15 mole percent, cationic monomer with the balance acrylamide.

It is generally preferred that the solids in the resultant cake are used or dumped without further drying (for instance by heating or combustion) but if desired they can be subjected to further treatment before use or dumping.

As an example of the invention, waste inked paper is pulped in the presence of alkali silicate and chelating agent, bleached and filtered and soap is then added to the suspension.

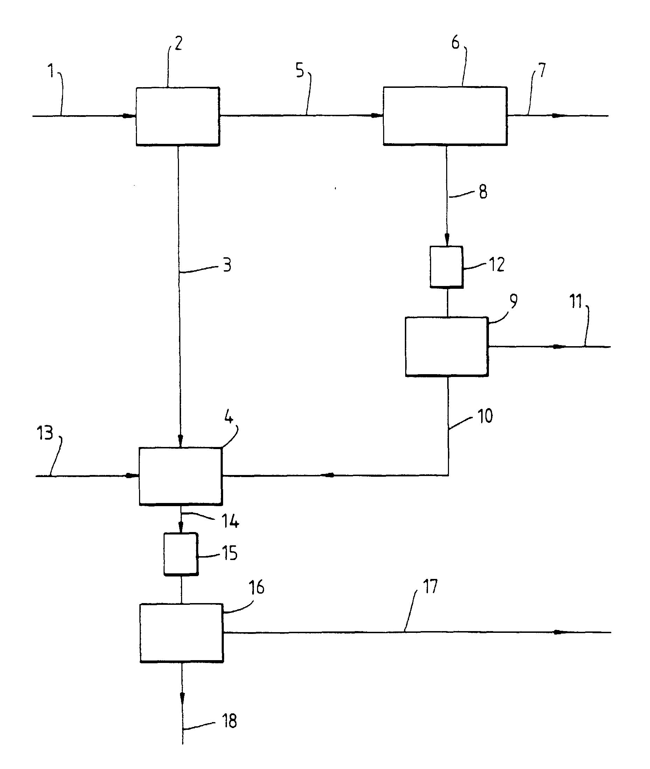

Referring to the drawing, the suspension is then subjected to air flotation at 2 to form a first Reject slurry (line 3) and an Accept liquor which is thickened and washed at 6 by suction drainage or passage over a drum thickener or screw press, and the filtrate is taken to a clarifier 9 while the solids are rewashed and again filtered, with the washings being taken to the clarifier.

This clarifier 9 is a Krofta flotation cell in which the liquor is subjected to air flotation with the clarified Accept liquor being recycled to the pulping stage and a second Reject slurry being collected.

The first and second Reject slurries are mixed together at 4 to form a slurry having a solids content of which about 50% is filler, 30% fibre fines and 20% ink. The addition of the second Reject is desirable as it increases the fibre content of the combined slurry and so improves its handling.

In the process of the invention, two-stage dosing is conducted at the dosing system 15, with 25ppm homopolymer of diallyldimethyl ammonium chloride having IV 2dl/g being mixed into the slurry followed by 100ppm bentonite.

In a comparative process (not in accordance with the invention) the two-stage dosing consists of adding the bentonite followed by a conventional high molecular weight cationic polymer.

Preferably a cationic polymer of 10 mole % quaternised dimethylaminoethyl acrylate and 90 mole % acrylamide and having IV above 8dl/g is added at a dosage of 100g/t after the addition of bentonite and before the pressing.

The process of the invention in this example is capable of giving a filter cake having a solids content of 38%, compared to a solids content of around 32% when conducted by the prior process.

## Claims

1. A process for separating suspended solids from an aqueous suspension of suspended solids comprising cellulosic fibre and hydrophobic material by mixing a cationic polymeric flocculant into the suspension and thereby flocculating the suspended solids and then separating the flocculated solids from the suspension by pressure filtration to form a cake, characterised in that the flocculated solids are aggregated by mixing an anionic colloidal material selected from inorganic polymers and swelling clays into the flocculated suspension and the suspension containing the aggregated solids is subjected to the pressure filtration.

2. A process according to claim 1 in which the suspension comprises mill effluent solids.

3. A process according to claim 2 in which the suspension is a suspension containing 5 to 50% by weight insoluble ink particles, 10 to 70% by weight cellulosic fibres and fines, and 0 to 80% by weight filler, the percentages being based on total solids.

4. A process according to claim 2 or claim 3 in which the suspension comprises the Reject suspension obtained in a paper deinking process by subjecting a suspension of paper fibres, filler and ink particles to flotation and thereby separating a hydrophobic Reject suspension from a hydrophilic Accept fraction.

5. A process according to any preceding claim that is part of a paper deinking process, and in which the cake is dumped.

6. A process according to any preceding claim in which the pressure filtration is by a belt press.

7. A process according to any preceding claim in which the flocculated solids are broken down to microflocs by stirring before adding the anionic colloidal material.

8. A process according to any preceding claim in which the anionic colloidal material is an anionic swelling clay.

9. A process according to any preceding claim in which the suspension has a suspended solids content of at least 0.1% by weight.

10. A process according to any preceding claim in which the polymer has intrinsic viscosity at least 4 dl/g.

11. A process according to claim 10 in which the polymer is a copolymer of acrylamide with dialkylaminoalkyl (meth) acrylate or dialkylaminoalkyl (meth) acrylamide as acid salt or quaternary ammonium salt.

12. A process according to any of claims 1 to 9 in which the cationic polymer is a water soluble organic synthetic polymer selected from polymers of cationic ethylenically unsaturated monomer, polyethylene imine, dicyandiamide polymers, and polyamine epichlorhydrin polymers wherein the polymer has IV 0.2 to 3dl/g and is formed from monomer of which at least 50% by weight is cationic.

13. A process according to any preceding claim in which the suspension containing the aggregated solids is flocculated by adding a second cationic polymeric flocculant before the pressure filtration, wherein this second flocculant has IV at least 4dl/g.

## Patentansprüche

1. Verfahren zum Abtrennen von suspendierten Feststoffen aus einer wäßrigen Suspension von Cellulosefaser und hydrophobes Material umfassenden suspendierten Feststoffen durch Einmischen eines kationischen polymeren Flockungsmittels in die Suspension und dadurch Flocken der suspendierten Feststoffe und anschließendes Abtrennen der geflockten Feststoffe aus der Suspension durch Druckfiltration unter Bildung eines Kuchens, dadurch gekennzeichnet, daß die geflockten Feststoffe durch Einmischen eines aus anorganischen Polymeren und Blähtonarten ausgewählten anionischen kolloidalen Materials in die geflockte Suspension aggregiert werden und die die aggregierten Feststoffe enthaltende Suspension der Druckfiltration unterzogen wird.

2. Verfahren nach Anspruch 1, worin die Suspension Mahlabfall-Feststoffe umfaßt.

3. Verfahren nach Anspruch 2, worin es sich bei der Suspension um eine Suspension handelt, die 5 bis 50 Gew.-% unlösliche Farbteilchen, 10 bis 70 Gew.-% Cellulosefasern und Feingut, und 0 bis 80 Gew.-% Füllstoff enthält, wobei sich die Prozentsätze auf den Gesamtgehalt an Feststoffen beziehen.

4. Verfahren nach Anspruch 2 oder Anspruch 3, worin die Suspension die Abfallsuspension umfaßt, die man in einem Papierenttintungsverfahren erhält, indem man eine Suspension von Papierfasern, Füllstoff und Farbteilchen einer Flotation unterzieht und dadurch eine hydrophobe Abfallsuspension von einer hydrophilen Gutstoff-Fraktion abtrennt.

5. Verfahren nach irgendeinem vorhergehenden Anspruch, bei dem es sich um einen Teil eines Papierenttintungsverfahrens handelt und worin der Kuchen weggeworfen wird.

6. Verfahren nach irgendeinem vorhergehenden Anspruch, worin die Druckfiltration mit Hilfe einer Riemenpresse erfolgt.

7. Verfahren nach irgendeinem vorhergehenden Anspruch, worin die geflockten Feststoffe vor der Zugabe des anionischen kolloidalen Materials durch Rühren zu Mikroflocken zerkleinert werden.

8. Verfahren nach irgendeinem vorhergehenden Anspruch, worin es sich bei dem anionischen kolloidalen Material um einen anionischen Blähton handelt.

9. Verfahren nach irgendeinem vorhergehenden Anspruch, worin die Suspension einen Gehalt an suspendierten Feststoffen von mindestens 0,1 Gew.-% aufweist.

10. Verfahren nach irgendeinem vorhergehenden Anspruch, worin das Polymer eine Grenzviskosität von mindestens 4 dl/g aufweist.

11. Verfahren nach Anspruch 10, worin das Polymer ein Copolymer von Acrylamid mit Dialkylaminoalkyl(meth)acrylat oder Dialkylaminoalkyl(meth)acrylamid als Säure-Salz oder quartäres Ammoniumsalz ist.

12. Verfahren nach irgendeinem der Ansprüche 1 bis 9, worin das kationische Polymer ein wasserlösliches organisches synthetisches Polymer ist, das aus Polymeren von kationischem ethylenisch ungesättigtem Monomer, Polyethylenimin, Dicyandiamid-Polymeren und Polyaminepichlorhydrin-Polymeren ausgewählt ist, worin das Polymer eine GV von 0,2 bis 3 dl/g aufweist und aus Monomer gebildet wird, von dem mindestens 50 Gew.-% kationisch sind.

13. Verfahren nach irgendeinem vorhergehenden Anspruch, worin die die aggregierten Feststoffe enthaltende Suspension durch Zugabe eines zweiten kationischen polymeren Flockungsmittels vor der Druckfiltration geflockt wird, wobei dieses zweite Flockungsmittel eine GV von mindestens 4 dl/g aufweist.

## Revendications

1. Procédé de séparation de solides en suspension à partir d'une suspension aqueuse de solides en suspension comprenant de la fibre cellulosique et du matériau hydrophobe en mélangeant un floculant polymère cationique à la suspension et en floculant ainsi les solides en suspension et ensuite en séparant les solides floculés de la suspension par filtration sous pression pour former un gâteau, caractérisé en ce que les solides floculés sont agrégés en mélangeant un matériau colloïdal anionique choisi parmi des polymères minéraux et des argiles gonflantes dans la suspension floculée et la suspension contenant les solides agrégés est soumise à la filtration sous pression.

2. Procédé selon la revendication 1, où la suspension comprend des solides effluents de papeterie.

3. Procédé selon la revendication 2, où la suspension est une suspension contenant 5 à 50 % en poids de particules d'encre insolubles, 10 à 70 % en poids de fibres cellulosiques et de fines et 0 à 80 % en poids de charge, les pourcentages étant rapportés à l'ensemble des solides.

4. Procédé selon la revendication 2 ou la revendication 3, où la suspension comprend la suspension rejetée obtenue dans un procédé de désencrage de papier en soumettant une suspension de fibres de papier, de charge et de particules d'encre à la flottation et en séparant ainsi une suspension rejetée hydrophobe d'une fraction acceptée hydrophile.

5. Procédé selon l'une quelconque des revendications précédentes, qui fait partie d'un procédé de désencrage de papier, et où le gâteau est mis en décharge.

6. Procédé selon l'une quelconque des revendications précédentes, où la filtration sous pression est une presse à bande.

7. Procédé selon l'une quelconque des revendications précédentes, où les solides floculés sont dispersés en microflocs par agitation avant d'ajouter le matériau colloïdal anionique.

8. Procédé selon l'une quelconque des revendications précédentes, où le matériau colloïdal anionique est une argile gonflante anionique.

9. Procédé selon l'une quelconque des revendications précédentes, où la suspension a une teneur en solides en suspension d'au moins 0,1 % en poids.

10. Procédé selon l'une quelconque des revendications précédentes, où le polymère a une viscosité intrinsèque d'au moins 4 dl/g.

11. Procédé selon la revendication 10, où le polymère est un copolymère d'acrylamide et de méthacrylate de dialkylaminoalkyle ou un dialkylaminoalkyl(méth)acrylamide sous forme de sel d'acide ou de sel d'ammonium quaternaire.

12. Procédé selon l'une quelconque des revendications 1 à 9, où le polymère cationique est un polymère synthétique organique soluble dans l'eau choisi parmi les polymères de monomères éthyléniquement insaturés cationiques, polyéthylèneimine, polymères de dicyandiamide, et polymères d'épichlorhydrine de polyamine, où le polymère a une IV de 0,2 à 3 dl/g et est constitué de monomère dont au moins 50 % en poids est cationique.

13. Procédé selon l'une quelconque des revendications précédentes, où la suspension contenant les solides agrégés est floculée en ajoutant un second floculant polymère cationique avant la filtration sous pression, où ce second floculant a une IV d'au moins 4 dl/g.
